# EUROPEAN PATENT APPLICATION

(11) **EP 4 417 473 A1**
(43) Date of publication of application: **21.08.2024**
(21) Application number: 23787000.1
(22) Date of filing: 10.04.2023
(51) Int. Cl.: B60S 5/06, B60L 53/80

(54) **BATTERY SWAPPING SYSTEM AND BATTERY SWAPPING METHOD**

(30) Priority: 29.12.2022 CN 202211717820
(71) Applicant: Sany Lithium Energy Co., Ltd., Changsha, Hunan 410100 (CN)
(72) Inventor: LIU, Jie, Hunan 410100 (CN); ZHANG, Xinj, Hunan 410100 (CN); DAI, Mingliang, Hunan 410100 (CN)
(74) Representative: Osterhoff, Utz
(86) International application number: PCT/CN2023/087358
(87) International publication number: WO 2024/138947

(57) **Abstract**

The present application provides a battery replacing system and a battery replacing method. The battery replacing system includes a battery replacement station and a transporting part. The battery replacement station includes a battery replacing device, two sets of first charging bases, a charger and two passages. Two sets of first charging bases are respectively arranged at two sides of battery replacing device along a first direction, each of first charging bases is configured to place one battery. The charger is electrically connected to first charging bases. Two passages are respectively arranged at two sides of battery replacing station along a second direction. The transporting part is configured to place a plurality of batteries and able to drive into and out of any one of passages. In this way, the problem of low service capacity of battery replacement stations in the related art is solved.

## Description

### TECHNICAL FIELD

The present application relates to the technical field of battery replacement, in particular to a battery replacing system and a battery replacing method.

### BACKGROUND

With the growing demand for environmental protection and energy conservation, electric vehicles have become an important direction for the future development of the automotive industry. At present, electric vehicles mostly use installed power battery packs to provide power for the entire vehicle. As we all know, the long charging time of electric vehicles severely restricts the development of electric vehicles. In order to solve the problem of long charging time of electric vehicles, existing technologies often use the form of battery replacement to replace the battery of the electric vehicles, that is, removing the depleted battery from the electric vehicle and installing the fully charged battery from the battery replacement station on the electric vehicle, and charging the removed depleted battery in the battery replacement station.

In order to improve the efficiency of battery replacement, the structure of the battery replacing device in the battery replacement station has also been improved. However, due to the small number of batteries configured at the current market battery replacement stations, taking the battery replacement station used for electric trucks as an example, the number of batteries configured at the battery replacement station is generally no more than 10. And due to the low charging speed of the battery in the station, for a battery with an energy of 282kW. h, it takes one hour to charge from 20% of power to 95% of power. This means the battery replacement station can only meets the battery replacement demand of no more than 10 electric vehicles in one hour, and the service capacity of the battery replacement station is low. When there are many vehicles waiting for replacing battery and the frequency of battery replacement is high, the charging speed of battery in the station cannot meet operational needs, which can result in a situation of electric vehicles waiting for replacing battery in a queue, and cannot fully utilize the advantage of the high-efficiency battery replacing device. If the number of batteries configured at the battery replacement station is directly increased, it can inevitably increase the size of the battery replacement station, resulting in a decrease in battery replacement efficiency and still unable to improve the service capacity of a single battery replacement station.

Therefore, how to solve the problem of low service capacity of battery replacement stations in the related art has become an important technical problem that needs to be solved by those skilled in the art.

### SUMMARY

The present application provides a battery replacing system and a battery replacing method to solve the defect of low service capacity of battery replacement stations in the related art.

One aspect of the present application provides a battery replacing system, which includes a battery replacement station and a transporting part. The battery replacement station includes a battery replacing device, two sets of first charging bases, a charger and two passages. The two sets of the first charging bases are respectively arranged at two sides of the battery replacing device along a first direction, each of the first charging bases is configured to place one battery. The charger is electrically connected to the first charging bases so as to charge the battery through the first charging bases. The two passages are respectively arranged at two sides of the battery replacing station along a second direction. The transporting part is configured to place a plurality of batteries and able to drive into and out of any one of the passages.

In an embodiment, the battery replacing system further includes a plurality of second charging bases provided on the transporting part, and the charger is externally connected with a charging line, and the charging line is electrically connected with the second charging bases so as to charge the batteries on the transporting part through the second charging bases.

In an embodiment, at least two transporting parts are provided, at least one of the transporting parts is provided with the second charging bases, and the batteries on the transporting parts are placed on the second charging bases to be charged.

In an embodiment, the battery replacing device includes a base frame, a first grabbing mechanism, a second grabbing mechanism, and a first driving mechanism. The base frame is provided between the two sets of the first charging bases. The first grabbing mechanism and the second grabbing mechanism are configured to perform grabbing action and releasing action for the battery and are provided on the base frame side by side, and a grabbing direction of the first grabbing mechanism is opposite to a grabbing direction of the second grabbing mechanism. The first driving mechanism is configured to be able to drive the base frame to rotate around a vertical axis and to respectively drive the first grabbing mechanism and the second grabbing mechanism to move reciprocatingly along their grabbing directions.

In an embodiment, each set of the first charging bases are arranged along a first arc, a length direction of the first charging base is provided along a radial direction of the first arc, centers of the first arcs corresponding to the two sets of the first charging bases are coincident, and the center of the first arc is located at a rotating axis of the base frame.

In an embodiment, each set of the first charging bases are arranged along a second arc, a length direction of the first charging base is provided along a radial direction of the second arc, centers of the second arcs corresponding to the two sets of the first charging bases are provided with intervals along the first direction. The base frame is configured to be able to move along the first direction, and the battery replacing device further includes a second driving mechanism configured to be able to drive the base frame to move along the first direction.

In an embodiment, each set of the first charging bases are arranged along a straight line, and an arrangement direction of each set of the first charging bases is perpendicular to the first direction.

In an embodiment, the transporting part includes a carrying part and a hauling part for driving the carrying part to move, the battery is provided on the carrying part, and the hauling part is detachably connected to the carrying part.

In an embodiment, at least two carrying parts are provided, and any one of the carrying parts is able to be detachably connected to the hauling part.

In an embodiment, the batteries include a first battery and a second battery, and capacity of the second battery is smaller than the capacity of the first battery.

In an embodiment, the battery replacing system further includes a charging pile configured to be able to be electrically connected with the second charging bases.

Another aspect of the present application provides a battery replacing method, based on the above-mentioned battery replacing system, the battery replacing method includes:
using two passages as parking area for a battery-to-be-replaced vehicle, and using a battery replacing device and a battery on a first charging base to replace battery for the battery-to-be-replaced vehicle on any one of the passages; or parking a transporting part on one of the passages, using the other passage as the parking area for the battery-to-be-replaced vehicle, and using the battery replacing device and the battery on the transporting part to replace battery for the battery-to-be-replaced vehicle.

In an embodiment, the battery replacing method further includes:
charging the battery on the first charging base or the battery on the transporting part by using a charger during a time period when electricity prices are low.

The present application further provides a battery replacing method, based on the above-mentioned battery replacing system, the battery replacing method includes:
using a battery replacing device and a battery on a first charging base to replace battery, and using the battery replacing device and the battery on the first charging base to replace battery includes:
controlling a first grabbing mechanism to grab a fully charged battery on the first charging base;
controlling a base frame to rotate around a vertical axis to make a second grabbing mechanism face one of passages; and
controlling the second grabbing mechanism to grab a depleted battery from a battery-to-be-replaced vehicle on the passage, and controlling the base frame to rotate 180 degrees around the vertical axis to make the first grabbing mechanism install the fully charged battery on the battery-to-be-replaced vehicle.

In an embodiment, the battery replacing method further includes:
using the battery replacing device and the battery on a transporting part to replace battery; and using the battery replacing device and the battery on the transporting part to replace battery includes:
controlling the first grabbing mechanism to grab a fully charged battery on one of the passages, while the second grabbing mechanism faces the other passage;
controlling the second grabbing mechanism to grab the depleted battery from the battery-to-be-replaced vehicle on the other passage; and
controlling the base frame to rotate 180 degrees around the vertical axis to make the first grabbing mechanism install the fully charged battery on the battery-to-be-replaced vehicle.

The battery replacing system provided by the present application includes a battery replacement station and a transporting part, in which, the battery replacement station includes a battery replacing device, two sets of first charging bases, a charger and two passages. The two sets of the first charging bases are respectively arranged at two sides of the battery replacing device along a first direction, each of the first charging bases is configured to place one battery accordingly. The two sets of the first charging bases are within a working range of the battery replacing device, and the battery replacing device can be used to grab a battery from any one of the first charging bases or place a battery on any one of the first charging bases. The charger is electrically connected to the first charging bases so as to charge the battery through the first charging bases. The two passages are respectively arranged at two sides of the battery replacing station along the second direction, the battery-to-be-replaced vehicle can be parked on both passages, and installation positions for battery of the battery-to-be-replaced vehicles on both passages are within the working range of the battery replacing device, the battery replacing device and the battery on the first charging bases can be used to replace battery for the battery-to-be-replaced vehicle on any one of the passages. The above-mentioned transporting part can drive into and out of any one of the passages, and a plurality of batteries are provided on the transporting part. When the transporting part is located on the passage, batteries on the transporting part are within the working range of the battery replacing device, the battery replacing device can be used to grab a battery from the transporting part or to place a battery on the transporting part. When the transporting part is parked on one of the passages, the battery-to-be-replaced vehicle can be parked on the other passage, and the battery replacing device and batteries on the transporting part can be used to replace battery for the battery-to-be-replaced vehicle. In this way, the battery replacing system provided by the present application can realize two types of battery replacing modes. When there are few battery-to-be-replaced vehicles, a double-passage battery replacing mode can be realized, and it is possible to replace battery for battery-to-be-replaced vehicles on any of the passages by using the battery replacing device. When there are many battery-to-be-replaced vehicles, the transporting part can be parked on one of the passages, and the other passage can be used for parking battery-to-be-replaced vehicles. The transporting part serves as a storage and transportation equipment for batteries, which increases the number of batteries configured for the battery replacing system and can meet the demand for replacing battery for many battery-to-be-replaced vehicles and effectively improve the service capacity of the battery replacing system.

Moreover, the transporting part is independent from the battery replacement station and is provided separately, the impact of the transporting part on the size of the battery replacement station is small, and accordingly, high efficiency in replacing battery is ensured.

### BRIEF DESCRIPTION OF THE DRAWINGS

In order to more clearly describe the technical solutions of the present application or the related art, the following will simply introduce the drawings needed in the description of the embodiments or the related art. Obviously, the drawings described below are some embodiments of the present application, and for those skilled in the art, other drawings can be obtained based on these drawings without creative effort.
FIG. 1 is a structural schematic view showing a battery replacing system according to an embodiment of the present application in which first charging bases are arranged along a second arc and a charger is used to charge parts of batteries on second charging bases.
FIG. 2 is a structural schematic view showing a battery replacing system according to an embodiment of the present application in which both two passages are used as parking area for battery-to-be-replaced vehicles.
FIG. 3 is a structural schematic view showing a battery replacing system according to an embodiment of the present application in which a transporting part is parked on a passage.
FIG. 4 is a structural schematic view showing a battery replacing system according to an embodiment of the present application in which first charging bases are arranged along a first arc and a charging pile is used to charge batteries on second charging bases.
FIG. 5 is a structural schematic view showing a battery replacing system according to an embodiment of the present application in which first charging bases are arranged along a straight line and a charging pile is used to charge batteries on second charging bases.
FIG. 6 is a structural schematic view of a battery replacing device according to an embodiment of the present application.
FIG. 7 is a structural schematic view showing a battery replacing system according to an embodiment of the present application in which a first grabbing mechanism and a second grabbing mechanism both grab a battery.
FIG. 8 is a structural schematic view of a transporting part according to an embodiment of the present application.
FIG. 9 is a structural schematic view of a carrying part that has been parted from a hauling part according to an embodiment of the present application.

Reference signs in the drawings:
1-battery replacing device, 2-first charging base, 3-charger, 4-passage, 5-battery, 6-transporting part, 7-base frame, 8-first grabbing mechanism, 9-second grabbing mechanism, 10-second driving mechanism, 11-carrying part, 12-hauling part, 13-charging pile, 14-battery-to-be-replaced vehicle, 15-telescoping leg, x-first direction, y-second direction.

### DETAILED DESCRIPTION OF THE EMBODIMENTS

In order to make the purpose, technical solution, and advantages of the present application clearer, the following will combine the drawings in the present application to clearly and completely describe the technical solution in the present application. Obviously, the embodiments described are some embodiments of the present application and not all the embodiments. Based on the embodiments of the present application, all other embodiments obtained by those skilled in the art without creative effort should fall within the scope of the present application.

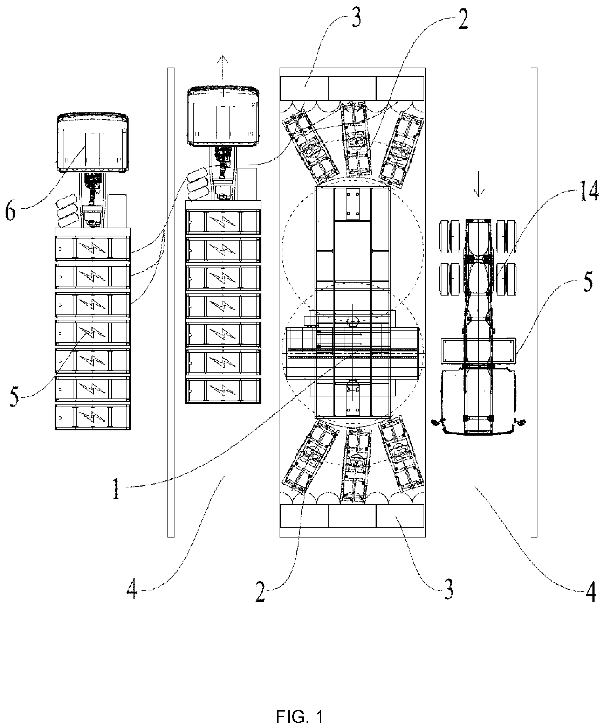

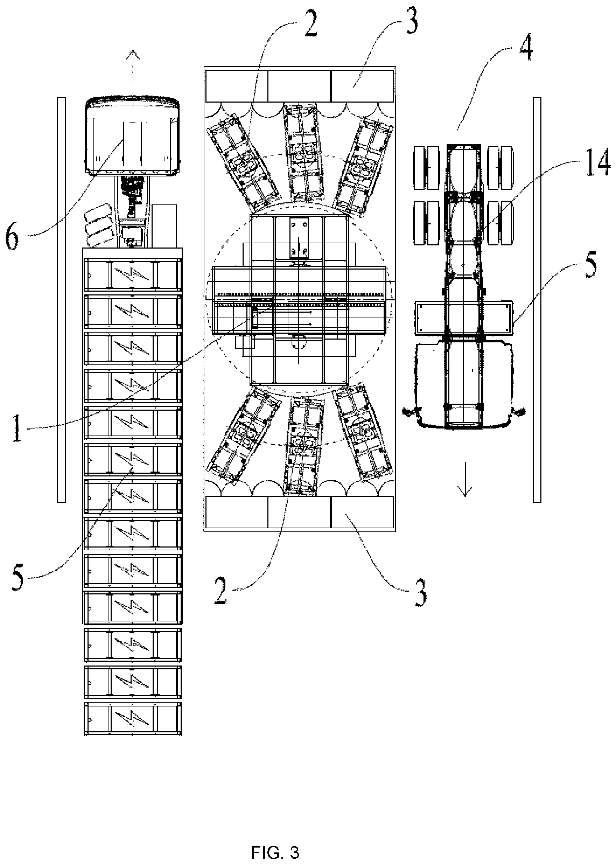

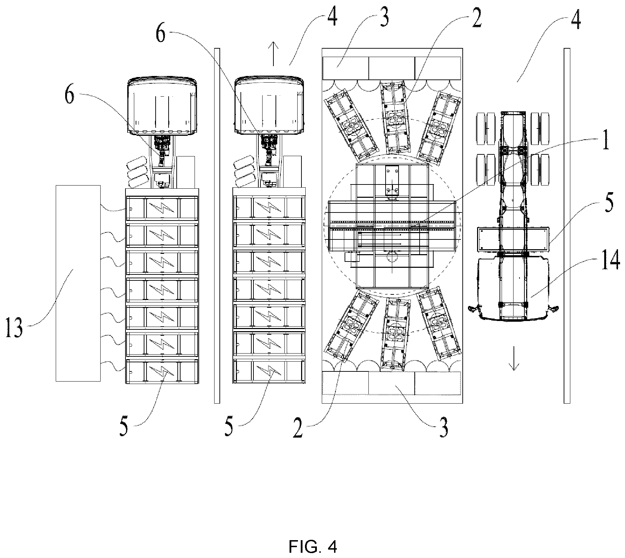

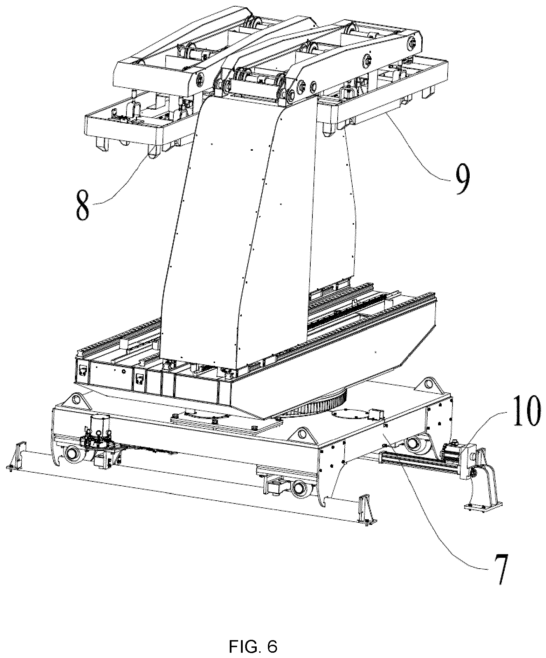

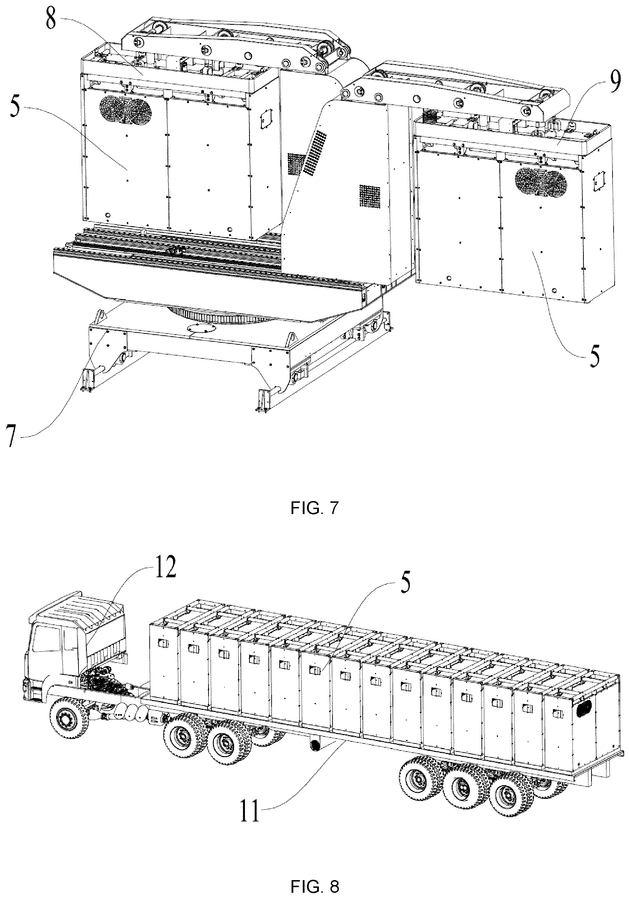

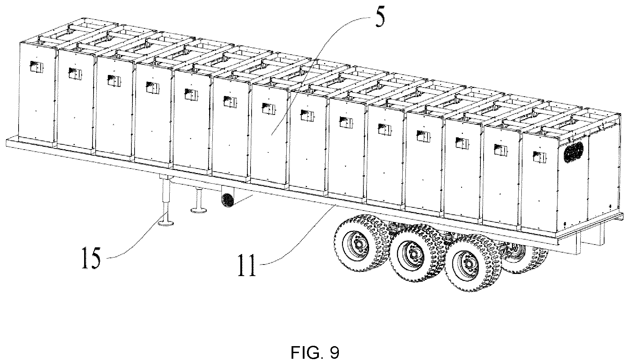

The battery replacing system of the embodiments of the present application is described below in conjunction with FIGs. 1 to 9.

As shown in FIGs. 1 to 9, an embodiment of the present application provides a battery replacing system including a battery replacement station and a transporting part 6.

Specifically, the battery replacement station includes a battery replacing device 1, first charging bases 2, a charger 3, and passages 4.

The first charging bases 2 are provided with two sets, and two sets of the first charging bases 2 are respectively arranged at two sides of the battery replacing device 1 along a first direction x. Each first charging base 2 is configured to be used for placing one battery 5, the two sets of first charging bases 2 are within the working range of the battery replacing device 1. The battery replacing device can grab the battery 5 on any of first charging bases 2, and can also place the battery 5 on any of first charging bases 2.

The charger 3 is electrically connected to the first charging base 2, and the charger 3 can charge the battery 5 through the first charging base 2. A plurality of chargers 3 may be provided to make each charger 3 correspond to each first charging base 2.

The number of the above-mentioned passages 4 is two, and two passages 4 are respectively arranged at two sides of the battery replacing device 1 along a second direction y. The second direction y and the first direction x are perpendicular to each other.

Both passages 4 can park battery-to-be-replaced vehicles 14, and battery installation positions of the battery-to-be-replaced vehicles 14 on both passages 4 can be within the working range of the battery replacing device 1. Using the battery replacing device 1 and the battery 5 on the first charging base 2 can replace battery for the battery-to-be-replaced vehicle 14 on any of passages 4.

The above-mentioned transporting part 6 can drive into and out of any of the passages 4. The transporting part 6 is configured to be used for placing a plurality of batteries 5. When the transporting part 6 is located on a passage 4, the batteries 5 on the transporting part 6 are within the working range of the battery replacing device 1. The batteries 5 on the transporting part 6 can be grabbed using the battery replacing device 1, and the batteries 5 can also be placed on the transporting part 6.

It should be noted that, when parking the transporting part 6 on the passage 4, as many batteries 5 as possible should be placed within the working range of the battery replacing device 1. When all the batteries 5 within the working range of the battery replacing device 1 are depleted batteries, fully charged batteries 5 at other positions of the transporting part 6 can be placed within the working range of the battery replacing device 1 by moving the transporting part 6. When the batteries 5 on the transporting part 6 are all depleted batteries, batteries 5 on the transporting part 6 and batteries 5 on the first charging bases 2 can be exchanged by using the battery replacing device 1. The batteries 5 in a depleted state are placed on the first charging bases 2 and charged with the charger 3.

It should be further noted that, when charging the batteries 5 on the transporting part 6, it can be chosen to charge during a time period at night when electricity prices are low or at any time as needed.

When parking the transporting part 6 on one of the passages 4, the battery-to-be-replaced vehicle 14 can be parked on the other passage 4, and the battery replacing device 1 and the batteries 5 on the transporting part 6 are used to replace battery for the battery-to-be-replaced vehicle 14.

In this way, the battery replacing system provided by this embodiment of the present application can realize two types of battery replacing modes. When there are few battery-to-be-replaced vehicles 14, a double-passage battery replacing mode can be realized, and it is possible to replace battery for battery-to-be-replaced vehicles 14 on any of the passages 4 by using the battery replacing device 1. When there are many battery-to-be-replaced vehicles 14, the transporting part 6 can be parked on one of the passages 4, and the other passage 4 can be used for parking battery-to-be-replaced vehicles 14. The transporting part 6 serves as a storage and transportation equipment for batteries 5, which increases the number of batteries 5 configured for the battery replacing system, and can meet the demand for replacing battery for many battery-to-be-replaced vehicles 14 and effectively improve the service capacity of the battery replacing system.

Moreover, the transporting part 6 is independent from the battery replacement station and is provided separately, the impact of the transporting part 6 on the size of the battery replacement station is small, and accordingly, high efficiency in replacing battery is ensured.

Furthermore, when sockets in the battery-to-be-replaced vehicle 14 for connecting with the battery 5 are damaged and need to be repaired, or when other positions of the battery-to-be-replaced vehicle 14 are damaged and it needs to lift up some components to repair, the battery-to-be-replaced vehicle 14 can be parked on one of the passages 4, the battery replacing device 1 is used to lift up the battery 5 or other components that need to be lifted, and the battery-to-be-replaced vehicle 14 is repaired.

In order to facilitate charging the batteries 5 on the transporting part 6, in an embodiment, the transporting part further includes a plurality of second charging bases, and the plurality of second charging bases are provided on the transporting part 6. By providing charging lines externally connected with the charger 3 in the battery replacement station, and making charging lines electrically connect with the second charging bases, the charger 3 can directly charge batteries 5 on the transporting part 6 through the second charging bases as shown in FIG. 1, which can prevent the transfer between the first charging base 2 and the transporting part 6.

Each charger 3 in the battery replacement station can be externally connected with charging lines to improve the charging efficiency for batteries 5 on the transporting part 6.

When charging batteries 5 on the transporting part 6, the transporting part 6 can be parked on one of the passages 4 or outside the battery replacement station, such as parking the transporting part 6 on one side of the charger 3 away from the battery replacing device 1.

In an embodiment, there are at least two transporting parts 6, and at least one of them is provided with the above-mentioned second charging bases, that is, a part of the transporting parts 6 is configured with the second charging bases, and using the charger 3 and the second charging bases to charge batteries 5 on the transporting part 6, while the other part of the transporting parts 6 is not configured with the second charging bases, by transporting batteries 5 on the transporting parts 6 to the first charging bases 2 to charge them. In this way, the charger 3 and the first charging bases 2 can be fully utilized, and the number of second charging bases is reduced, which can reduce the cost of the battery replacement system.

In an embodiment of the present application, the battery replacing device 1 is configured as a type of structure of double-grippers battery replacing device.

The battery replacing device 1 includes a base frame 7, a first grabbing mechanism 8, a second grabbing mechanism 9 and a first driving mechanism. The base frame 7 is provided between two sets of first charging bases 2, and is used for supporting the first grabbing mechanism 8 and the second grabbing mechanism 9.

The first grabbing mechanism 8 and the second grabbing mechanism 9 are provided on the base frame 7, and either of the first grabbing mechanism 8 and the second grabbing mechanism 9 can perform grabbing action and releasing action for battery 5. The first grabbing mechanism 8 and the second grabbing mechanism 9 are provided on the base frame 7 side by side, grabbing directions of the first grabbing mechanism 8 and the second grabbing mechanism 9 are opposite to each other.

The above-mentioned first driving mechanism can drive the base frame 7 to rotate around a vertical axis, and respectively drive the first grabbing mechanism 8 and the second grabbing mechanism 9 to rise and fall, and can drive the first grabbing mechanism 8 and the second grabbing mechanism 9 to move reciprocatingly along their grabbing directions, respectively.

Specifically, the first driving mechanism includes a first driving member for driving the base frame 7 to rotate, a second driving member for respectively driving the first grabbing mechanism 8 and the second grabbing mechanism 9 to rise and fall, and a third driving member for driving the first grabbing mechanism 8 and the second grabbing mechanism 9 to move reciprocatingly along their grabbing directions, respectively.

It should be noted that, the structural principles of the first grabbing mechanism 8, the second grabbing mechanism 9, the first driving member, the second driving member, and the third driving member are mature existing technologies for those skilled in the art, and there is no further description here.

When using the battery replacing device 1 and batteries 5 on the first charging base 2 to replace battery, before parking the battery-to-be-replaced vehicle 14 on the passage 4, the first grabbing mechanism 8 can be used to grab a fully charged battery on the first charging base 2, and the base frame 7 is made to rotate around the vertical axis, so as to make the second grabbing mechanism 9 face towards the passage 4. When the battery-to-be-replaced vehicle 14 is well parked, using the second grabbing mechanism 9 to grab a depleted battery on the battery-to-be-replaced vehicle 14, and then making the base frame 7 rotate 180 degrees around the vertical axis, then making the first grabbing mechanism 8 install the fully charged battery on the battery-to-be-replaced vehicle 14, so as to complete a battery replacement operation, then the vehicle that has completed a battery replacement operation can drive out of the passage 4, and the next battery-to-be-replaced vehicle 14 can then drive into this passage 4, or there is already a parked battery-to-be-replaced vehicle 14 on another passage 4. Then making the base frame 7 rotate so as to make the second grabbing mechanism 9 place the depleted battery on the first charging base 2, then making the second grabbing mechanism 9 grab a fully charged battery on another first charging base 2, and replacing battery for the next battery-to-be-replaced vehicle 14 or the battery-to-be-replaced vehicle 14 on another passage 4.

When using the battery replacing device 1 and batteries 5 on the transporting part 6 to replace battery, it needs to park the transporting part 6 on one of the passages 6 in advance, and before the battery-to-be-replaced vehicle 14 is parked on another passage 4, the first grabbing mechanism 8 can be used to grab a fully charged battery on the transporting part 6, at this time, the second grabbing mechanism 9 just faces another passage 4. When the battery-to-be-replaced vehicle 14 is parked, using the second grabbing mechanism 9 to grab a depleted battery on the battery-to-be-replaced vehicle 14, and then making the base frame 7 rotate 180 degrees around the vertical axis, making the first grabbing mechanism 8 install the fully charged battery on the battery-to-be-replaced vehicle 14, so as to complete the battery replacement operation. Then the vehicle that has completed the battery replacement operation can drive out of the passage 4, and the next battery-to-be-replaced vehicle 14 can then drive into this passage 4. Then making the base frame 7 rotate 180 degrees so as to make the second grabbing mechanism 9 place the depleted battery on the transporting part 6, and then making the second grabbing mechanism 9 grab another fully charged battery on the transporting part 6 for replacing battery for the next battery-to-be-replaced vehicle 14.

In this way, using the double-gripper battery replacing device can grab the fully charged battery before parking the battery-to-be-replaced vehicle 14, and after removing the depleted battery from the battery-to-be-replaced vehicle 14, the fully charged battery can be installed on the battery-to-be-replaced vehicle 14 immediately, which fully utilizes time and reduces the waiting time, and can greatly increase efficiency in battery replacement.

Moreover, after using the first grabbing mechanism 8 to grab the fully charged battery on the first charging base 2 or the transporting part 6, there will be empty positions at corresponding positions of the first charging base 2 or the transporting part 6, so there is no need to set up a special transfer rack, which can reduce the space occupied by the battery replacement station.

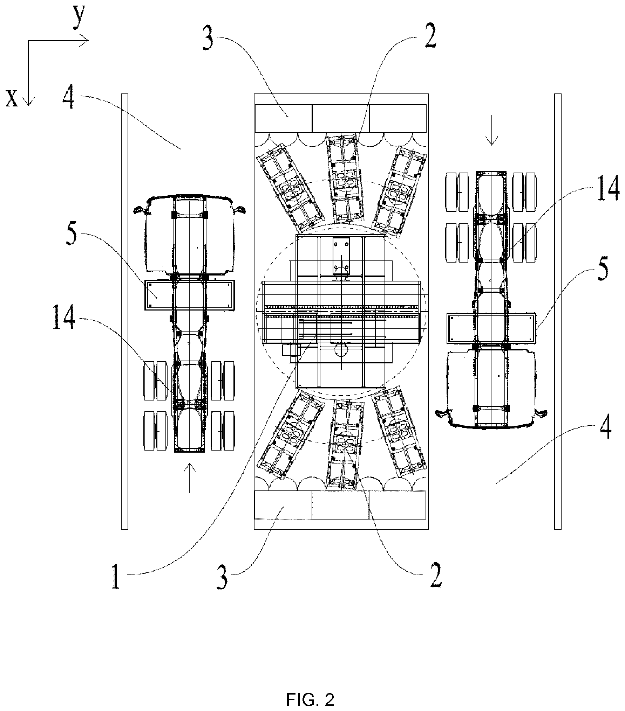

In some embodiments, first charging bases 2 of each set are arranged along an arc, and this arc is named as first arc, and a length direction of the first charging base 2 is provided along a radial direction of the first arc. Two first arcs corresponding to the two sets of first charging bases 2 have same radius and coinciding centers. The center of the first arc is located at a rotating axis of the base frame 7, as shown in FIGs. 2 to 4.

During the rotating process of the base frame 7, the grabbing directions of the first grabbing mechanism 8 and the second grabbing mechanism 9 change accordingly, and both are along the radial direction of the first arc. When the first grabbing mechanism 8 and the second grabbing mechanism 9 rotate to face the first charging bases 2, the grabbing directions of the first grabbing mechanism 8 and the second grabbing mechanism 9 are in accordance with the placing directions of the first charging bases 2 and the batteries 5.

When using the battery replacing device 1 and batteries 5 on the first charging bases 2 to replace battery, it only requires the rotation of the base frame 7, which can prevent a movement of the base frame 7 along the first direction x, and can simplify the structure of the battery replacing device 1 and reduce the area occupied by the battery replacement station, making the structure of the battery replacement station compact.

In other embodiments, first charging bases 2 of each set are arranged along a second arc, and the length direction of the first charging base 2 is provided along a radial direction of the second arc. The centers of two second arcs corresponding to two sets of first charging bases 2 are provided with intervals in the first direction x, specifically, a distance of two centers of two second arcs corresponding to two sets of first charging bases 2 in the first direction x is greater than the radius of the second arc, as shown in FIG. 1.

Since the distance between two sets of first charging bases 2 is large, when making the transporting part 6 park on the passage 4, more batteries 5 on the transporting part 6 can face a space between the two sets of first charging bases 2. When using the battery replacing device 1 and batteries 5 on the transporting part 6 to replace battery, the number of moves for the transporting part 6 can be reduced.

In order to ensure that the battery replacing device 1 can successfully grab and release batteries 5 on two sets of first charging bases 2 and all batteries 5 on the transporting part 6 that face the space between the two sets of first charging bases 2, the base frame 7 can be moved along the first direction x to approach or move away from one set of first charging bases 2.

In this way, precision requirement for parking positions of the battery-to-be-replaced vehicle 14 can be reduced, which makes the parking more convenient.

Accordingly, the battery replacing device 1 further includes a second driving mechanism 10, and the second driving mechanism 10 is used to drive the base frame 7 to move along the first direction x.

It should be noted that, the structural principle of the second driving mechanism 10 is a mature existing technology for those skilled in the art and there is no further description here.

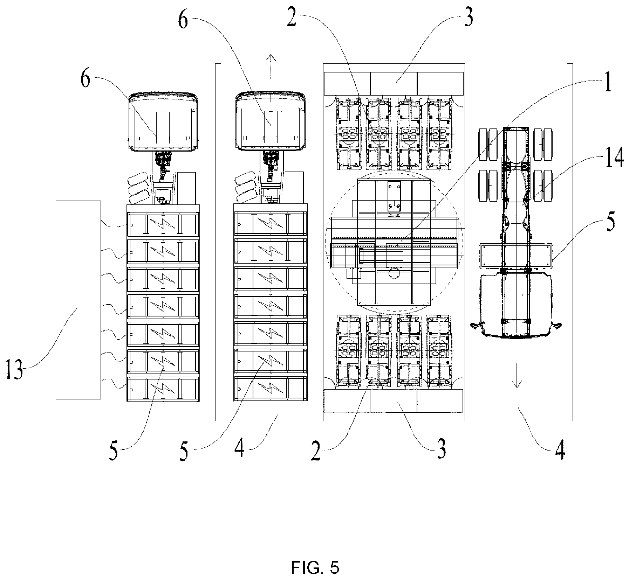

In some embodiments, first charging bases 2 of each set can be arranged along a straight line, and the length direction of the first charging base 2 is provided along the first direction x. The arrangement direction of each set of first charging bases 2 is perpendicular to the first direction x, as shown in FIG. 5.

In an embodiment of the present application, the transporting part 6 includes a carrying part 11 and a hauling part 12, the batteries 5 are provided on the carrying part 11, and the carrying part 11 is used to support the batteries 5. The hauling part 12 and the carrying part 11 are connected, and the carrying part 12 is used to drive the carrying part 11 to move.

The above-mentioned transporting part 6 can be modified from an ordinary cargo truck.

The above-mentioned carrying part 11 has rolling wheels, and the rolling wheels can drive the carrying part 11 to move on the ground as they roll on the ground. Specifically, the above-mentioned carrying part 11 can be a semi-trailer, and telescoping legs 15 are provided below the semi-trailer. When the semi-trailer moves to a target position and the hauling part 12 is parted from the semi-trailer, the telescoping legs 15 can support the semi-trailer to ensure that the carrying part 11 is stable.

The above-mentioned hauling part 12 can be chosen from, but is not limited to, tractors, automated guided vehicles (abbreviated as AGV), or unmanned vehicles and so on.

In some embodiments, the hauling part 12 and the carrying part 11 of the transporting part 6 are provided to be undetachable.

In other embodiments, the hauling part 12 is detachably connected to the carrying part 11. When charging batteries 5 on the carrying part 11, the hauling part 12 can be detached from the carrying part 11, and the hauling part 12 is used for other transportation missions.

In a further embodiment, at least two carrying parts 11 are provided, and both carrying parts 11 can be detachably connected to the hauling part 12, so as to make the at least two carrying parts 11 share the same hauling part 12, which is conducive to reducing the number of the hauling part 12 and reducing the cost of the battery replacing system.

When there is an enough number of fully charged batteries on the carrying part 11, the hauling part 12 can also be used to transport the carrying part 11 and batteries 5 on this carrying part 11 to other mobile battery replacement stations without power source, to supply for mobile battery replacement stations without power source to use.

In an embodiment, two types of batteries 5 that have different capacity are provided as first battery and second battery, and the capacity of the second battery is smaller than that of the first battery.

The first battery can be placed on the first charging base 2, and the second battery can be placed on the transporting part 6.

When the transporting part 6 has at least two carrying parts 11, it is also possible to place the second battery on a part of the carrying parts 11, and place the first battery on the first charging base 2 and the other part of the carrying parts 11. It is also possible to place the second battery on all the carrying parts 11, and place the first battery on the first charging base 2.

When replacing battery for the battery-to-be-replaced vehicle 14 during daytime, the first battery can be used to replace batteries for the battery-to-be-replaced vehicle 14.

When in the evening or at night, after the battery-to-be-replaced vehicle 14 has finished working, the second battery can be used to replace battery for the battery-to-be-replaced vehicle 14. The first battery that is removed from the battery-to-be-replaced vehicle 14 can be placed on the carrying part 11, and charging the first battery during a time period at night when electricity prices are low. In the next morning, the battery with small capacity can be removed from the battery-to-be-replaced vehicle 14, and then the fully charged large capacity battery is installed on the battery-to-be-replaced vehicle 14.

In this way, charging the large capacity battery during the time period when electricity prices are low, which can reduce the average purchasing electricity price of the battery replacing system, thereby reducing the operation cost of the battery replacing system.

Moreover, the cost of a small capacity battery is lower than that of a large capacity battery, which means, the cost of the second battery is lower than that of the first battery. By providing the second battery, not only the battery replacement demand for the battery-to-be-replaced vehicle 14 is met, but also the cost of the battery replacing system is reduced.

In a further embodiment, the battery replacing system includes a charging pile 13, the charging pile 13 is able to be electrically connected with the second charging base. The charger 3 can be used to charge the batteries 5 on the second charging bases, and the charging pile 13 can also be used to charge the batteries 5 on the second charging bases. By providing the charging pile 13, the charging pressure of the charger 3 in the battery replacing station can be relieved.

The charging pile 13 and the battery replacing station can be provided in the same area, when it needs to use the charging pile 13 to charge the batteries 5 on the transporting part 6, such arrangement can shorten the driving distance of the transporting part 6, thereby reducing transportation cost and improving efficiency.

The charging pile 13 can also be provided at a location far from the battery replacing station. When it needs to use the charging pile 13 to charge the batteries 5 on the transporting part 6, just use the transporting part 6 to transport batteries 5 to near the charging pile 13, which is suitable for small area sites.

In summary, the battery replacing system according to the embodiments of the present application realizes a functional effect of integrated energy replenishment of charging, storing, and replacing battery, which has a high service capacity and low construction and operation costs.

In another aspect, the present application further provides a battery replacing method based on any one of the above embodiments. The battery replacing method described below can be referred to in conjunction with the above-described battery replacing system.

The battery replacing method provided by the present application includes:
using the two passages 4 as parking areas for the battery-to-be-replaced vehicle 14, when replacing battery for the battery-to-be-replaced vehicle 14, the battery-to-be-replaced vehicle 14 can be parked on any one of the passages 4, and then using the battery replacing device 1 and the battery 5 on the first charging base 2 to replace battery for the battery-to-be-replaced vehicles 14 parked on any one of the passages 4.

Or, the transporting part 6 can also be parked on one of the passages 4, and using the other passage 6 as the parking area for the battery-to-be-replaced vehicle 14, when replacing battery for the battery-to-be-replaced vehicle 14, the battery-to-be-replaced vehicle 14 can be parked on this passage 4. And then using the battery replacing device 1 and batteries 5 on the transporting part 6 to replace battery for the battery-to-be-replaced vehicle 14.

In this way, the battery replacing system provided by this embodiment of the present application can realize two types of battery replacing modes. When there are few battery-to-be-replaced vehicles 14, a double-passage battery replacing mode can be realized, which means using the battery replacing device 1 to replace battery for battery-to-be-replaced vehicles 14 on any of the passages 4. When there are many battery-to-be-replaced vehicles 14, the transporting part 6 can be parked on one of the passages 4, and the other passage 4 can be used for parking battery-to-be-replaced vehicles 14. The transporting part 6 serves as a storage and transportation equipment for the batteries 5, which increases the number of batteries 5 configured for the battery replacing system, and can meet the demand for replacing battery for more battery-to-be-replaced vehicles 14 and effectively improve the service capacity of the battery replacing system.

In an embodiment, the battery replacing method includes: using the battery replacing device 1 and the battery on the first charging base 2 to replace battery, in which
the step of using the battery replacing device 1 and the battery on the first charging base 2 to replace battery includes:
controlling the first grabbing mechanism 8 to grab a fully charged battery on the first charging base 2;
controlling the base frame 7 to rotate around a vertical axis to make the second grabbing mechanism 9 face one of the passages 4; and
controlling the second grabbing mechanism 9 to grab a depleted battery from a battery-to-be-replaced vehicle 14 on the passage 4, and controlling the base frame 7 to rotate 180 degrees around the vertical axis to make the first grabbing mechanism 8 install the fully charged battery on the battery-to-be-replaced vehicle 14.

The battery replacing method can further include: using the battery replacing device 1 and the battery on the transporting part 6 to replace battery, in which
the step of using the battery replacing device 1 and the battery on the transporting part 6 to replace battery includes:
controlling the first grabbing mechanism 8 to grab a fully charged battery on one of the passages 4, while the second grabbing mechanism 9 faces towards the other passage 4;
controlling the second grabbing mechanism 9 to grab a depleted battery from a battery-to-be-replaced vehicle on the other passage 4; and
controlling the base frame 7 to rotate 180 degrees around the vertical axis to make the first grabbing mechanism 8 install the fully charged battery on the battery-to-be-replaced vehicle 14.

The derivation process of the beneficial effect of the battery replacing method according to the embodiments of the present application is similar to the derivation process of the beneficial effect of the above-mentioned battery replacing system, so there is no need to repeat them here.

In a further embodiment, it can be chosen to charge the batteries 5 on the first charging bases and batteries 5 on the transporting part 6 using the charger 3 during a time period when electricity prices are low, which can reduce the average purchasing electricity price of the battery replacing system, thereby reducing the operation cost of the battery replacing system.

Specifically, when replacing batteries for the battery-to-be-replaced vehicle 14 during daytime, a large capacity battery can be used to replace battery for the battery-to-be-replaced vehicle 14.

When in the evening or at night, after the battery-to-be-replaced vehicle 14 has finished working, a small capacity battery can be used to replace battery for the battery-to-be-replaced vehicle 14. The large capacity battery that is removed from the battery-to-be-replaced vehicle 14 can be placed on the transporting part 6, and charging the large capacity battery during a time period at night when electricity prices are low. In the next morning, the battery with small capacity can be removed from the battery-to-be-replaced vehicle 14, and then the fully charged large capacity battery is installed on the battery-to-be-replaced vehicle 14. In this way, charging the large capacity battery during the time period when electricity prices are low, which can reduce the average purchasing electricity price of the battery replacing system, and thereby reducing the operation cost of the battery replacing system.

Finally, it should be noted that: the above embodiments are only used to describe the technical solutions of the present application, and are not to limit them. Although the present application has been described in detail with reference to the foregoing embodiments, those skilled in the art should understand that: the technical solutions described in the foregoing embodiments can be modified, or some technical features thereof can be equivalently substituted, and those modifications and substitutions do not make the essence of the corresponding technical solutions deviate from the spirit and the scope of the technical solutions of the embodiments in the present application.

## Claims

1. A battery replacing system, **characterized by** comprising:
a battery replacement station comprising a battery replacing device, two sets of first charging bases, a charger and two passages, wherein the two sets of the first charging bases are respectively arranged at two sides of the battery replacing device along a first direction, each of the first charging bases is configured to place one battery, the charger is electrically connected to the first charging bases so as to charge the battery through the first charging bases, the two passages are respectively arranged at two sides of the battery replacing station along a second direction; and
a transporting part, configured to place a plurality of batteries, and able to drive into and out of any one of the passages.

2. The battery replacing system according to claim 1, further comprising a plurality of second charging bases provided on the transporting part,
wherein the charger is externally connected with a charging line, and the charging line is electrically connected with the second charging bases so as to charge the batteries on the transporting part through the second charging bases.

3. The battery replacing system according to claim 1, wherein at least two transporting parts are provided, at least one of the transporting parts is provided with the second charging bases, and the batteries on the transporting parts are placed on the second charging bases to be charged.

4. The battery replacing system according to any one of claims 1 to 3, wherein the battery replacing device comprises:
a base frame provided between the two sets of the first charging bases;
a first grabbing mechanism and a second grabbing mechanism, configured to perform grabbing action and releasing action for the battery, wherein the first grabbing mechanism and the second grabbing mechanism are provided on the base frame side by side, and a grabbing direction of the first grabbing mechanism is opposite to a grabbing direction of the second grabbing mechanism; and
a first driving mechanism configured to be able to drive the base frame to rotate around a vertical axis and to respectively drive the first grabbing mechanism and the second grabbing mechanism to move reciprocatingly along their grabbing directions.

5. The battery replacing system according to claim 4, wherein each set of the first charging bases are arranged along a first arc, a length direction of the first charging base is provided along a radial direction of the first arc, centers of the first arcs corresponding to the two sets of the first charging bases are coincident, and the center of the first arc is located at a rotating axis of the base frame.

6. The battery replacing system according to claim 4, wherein each set of the first charging bases are arranged along a second arc, a length direction of the first charging base is provided along a radial direction of the second arc, centers of the second arcs corresponding to the two sets of the first charging bases are provided with intervals along the first direction;
the base frame is configured to be able to move along the first direction, and the battery replacing device further comprises:
a second driving mechanism configured to be able to drive the base frame to move along the first direction.

7. The battery replacing system according to claim 4, wherein each set of the first charging bases are arranged along a straight line, and an arrangement direction of each set of the first charging bases is perpendicular to the first direction.

8. The battery replacing system according to claim 1, wherein the transporting part comprises a carrying part and a hauling part for driving the carrying part to move, the battery is provided on the carrying part, and the hauling part is detachably connected to the carrying part.

9. The battery replacing system according to claim 8, wherein at least two carrying parts are provided, and any one of the carrying parts is able to be detachably connected to the hauling part.

10. The battery replacing system according to claim 1, further comprising batteries, wherein the batteries comprise a first battery and a second battery, and capacity of the second battery is smaller than the capacity of the first battery.

11. The battery replacing system according to claim 2, further comprising:
a charging pile configured to be able to be electrically connected with the second charging bases.

12. A battery replacing method, **characterized in that**, based on a battery replacing system according to any one of claims 1 to 11, the battery replacing method comprises:
using two passages as parking area for a battery-to-be-replaced vehicle, and using a battery replacing device and a battery on a first charging base to replace battery for the battery-to-be-replaced vehicle on any one of the passages; or
parking a transporting part on one of the passages, using the other passage as the parking area for the battery-to-be-replaced vehicle, and using the battery replacing device and the battery on the transporting part to replace battery for the battery-to-be-replaced vehicle.

13. The battery replacing method according to claim 12, further comprising:
charging the battery on the first charging base or the battery on the transporting part by using a charger during a time period when electricity prices are low.

14. A battery replacing method, **characterized in that**, based on a battery replacing system according to any one of claims 4 to 7, the battery replacing method comprises:
using a battery replacing device and a battery on a first charging base to replace battery, wherein using the battery replacing device and the battery on the first charging base to replace battery comprises:
controlling a first grabbing mechanism to grab a fully charged battery on the first charging base;
controlling a base frame to rotate around a vertical axis to make a second grabbing mechanism face one of passages; and
controlling the second grabbing mechanism to grab a depleted battery from a battery-to-be-replaced vehicle on the passage, and controlling the base frame to rotate 180 degrees around the vertical axis to make the first grabbing mechanism install the fully charged battery on the battery-to-be-replaced vehicle.

15. The battery replacing method according to claim 14, further comprising:
using the battery replacing device and the battery on a transporting part to replace battery; wherein using the battery replacing device and the battery on the transporting part to replace battery comprises:
controlling the first grabbing mechanism to grab a fully charged battery on one of the passages, while the second grabbing mechanism faces the other passage;
controlling the second grabbing mechanism to grab the depleted battery from the battery-to-be-replaced vehicle on the other passage; and
controlling the base frame to rotate 180 degrees around the vertical axis to make the first grabbing mechanism install the fully charged battery on the battery-to-be-replaced vehicle.
